# DEMANDE DE BREVET EUROPEEN

(11) **EP 0 677 686 A1**
(43) Date de publication de la demande: **18.10.1995**
(21) Numéro de dépôt: 95400707.6
(22) Date de dépôt: 29.03.1995
(51) Int. Cl.: F16J 15/32, F16J 15/52

(54) **Boîtier porte-joint d'étanchéité à palier de guidage et son application notamment à une automobile**

(30) Priorité: 15.04.1994 FR 9404545
(71) Demandeur: NADELLA, F-18102 Vierzon Cédex (FR)
(72) Inventeur: Sommier, Christophe, F-18100 Vierzon (FR); Gordiet, Pascal, F-18100 Vierzon (FR)
(74) Mandataire: Polus, Camille

(57) **Abrégé**

Le boîtier porte-joint d'étanchéité à palier de guidage comprend un corps (400) avec une tranche (401) destinée à coopérer avec une face d'appui (221) d'un rebord (22), un logement (41) intérieur destiné à recevoir au moins partiellement un joint (10), un emplacement (42) ménageant une surface (421) intérieure qui constitue une portée extérieure (32), des moyens de fixation (43) destinés à coopérer avec le rebord (22) pour maintenir le boîtier (40) sur un arbre (20) et un soufflet (50) périphérique ondulé s'étendant axialement.

Application à un arbre de sortie de boîte de vitesse ou de moteur.

## Description

La présente invention concerne un boîtier porte-joint d'étanchéité à palier de guidage de soufflet sur un arbre et plus particulièrement est relative à un boîtier de ce type qui trouve une application notamment à un arbre de sortie de boîte de vitesses ou similaire ou de moteur thermique à combustion interne, par exemple d'automobiles.

Dans de nombreux secteurs techniques en particulier celui de l'automobile, il est nécessaire d'assurer l'étanchéité entre un arbre et un logement qui ont des mouvements relatifs en rotation et aussi des battements ou déplacements axiaux et radiaux. L'étanchéité est destinée à éviter la pénétration de corps étrangers dans le logement et/ou les fuites de lubrifiant vers l'extérieur.

Pour assurer l'étanchéité outre un joint à lèvre simple ou multiple, on utilise souvent un soufflet complémentaire qui est fixé sur le logement du palier à l'une de ses extrémités et relié à l'autre à un dispositif qui assure le guidage par rapport à l'élément en rotation, l'étanchéité dynamique voire l'immobilisation axiale du soufflet sur l'arbre pour protéger l'étanchéité.

Diverses solutions ont été déjà proposées. L'une de ces solutions consiste à maintenir mécaniquement le soufflet sur une bague extérieure qui contient un roulement à aiguilles et un joint d'étanchéité à l'aide d'un montage serré. La bague intérieure du roulement est emmanchée sur l'arbre et présente un rebord logé entre la bague extérieure et le roulement proprement dit pour assurer un arrêt axial. Une autre solution de ce type utilise un roulement à billes à contact radial dont la conception permet d'obtenir l'arrêt axial. Une autre solution consiste à fixer le soufflet sur un palier en matière plastique qui frotte sur l'arbre et qui contient un joint d'étanchéité. Dans ce cas, c'est le soufflet qui assure la position axiale du joint par rapport à l'arbre et cela d'une manière très aléatoire.

Le document FR 2 349 061 illustre un mode de réalisation d'une solution conforme au premier type.

Quelles que soient les qualités de ces solutions, aucune de celles-ci n'est techniquement ni économiquement sans inconvénient.

En effet, en particulier lorsqu'on utilise une solution avec un roulement à billes, pour laquelle se manifestent des défauts d'alignement entre bague intérieure et bague extérieure, le joint qui est habituellement fixé à la bague extérieure est soumis à des oscillations qui provoquent un phénomène de battement néfaste à la qualité de l'étanchéité. En plus de ce phénomène de battement angulaire, des déplacements axiaux se manifestent et se traduisent par "un balayage" axial du joint qui perd de son efficacité du fait des risques de détérioration de sa lèvre. Par ailleurs lorsque le dispositif de guidage et le soufflet sont rendus mécaniquement solidaires par assemblage, un risque de fuite notable existe au niveau de la liaison.

Quelle que soit la solution pratiquement retenue, on observera que toutes les solutions comprennent une multitude de composants plus ou moins complexes à fabriquer, ce qui accroît le prix de production et de montage et augmente d'autant les risques de fuites.

Le but de l'invention est de remédier à la plupart des inconvénients évoqués brièvement auparavant à propos des solutions connues de la technique antérieure.

L'invention a pour objet un boîtier porte-joint d'étanchéité à palier de guidage pour soufflet où le joint d'étanchéité possède au moins une lèvre destinée à coopérer avec un arbre, où l'arbre possède une surface extérieure et un rebord radial centrifuge avec une face d'appui et où le palier comprend une portée intérieure continue cylindrique constituée par cette surface extérieure et une portée extérieure discontinue faite d'au moins trois zones. Ce boîtier est remarquable en ce qu'il comprend un corps avec une tranche destinée à coopérer avec cette face d'appui, un logement intérieur destiné à recevoir au moins partiellement le joint, un emplacement ménageant une surface intérieure qui constitue cette portée extérieure, des moyens de fixation destinés à coopérer avec le rebord pour maintenir le boîtier sur l'arbre et un soufflet périphérique ondulé s'étendant axialement.

L'invention a aussi pour objet l'application d'un boîtier du type indiqué auparavant à un arbre de sortie notamment de boîte de vitesses ou de moteur par exemple de véhicules automobiles.

D'autres caractéristiques de l'invention apparaîtront à la lecture de la description et des revendications qui suivent ainsi qu'à l'examen du dessin annexé, donné seulement à titre d'exemple, où :

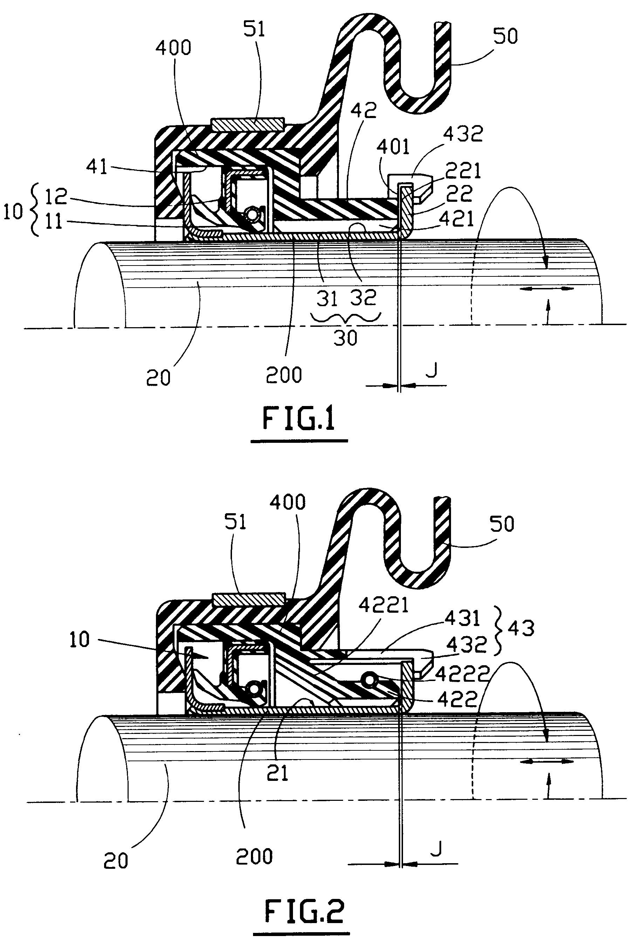

- la Figure 1 est une vue en coupe axiale méridienne d'un mode de réalisation d'un boîtier selon l'invention;
- la Figure 2 est une vue analogue à celle de la Figure 1 d'une variante d'exécution;

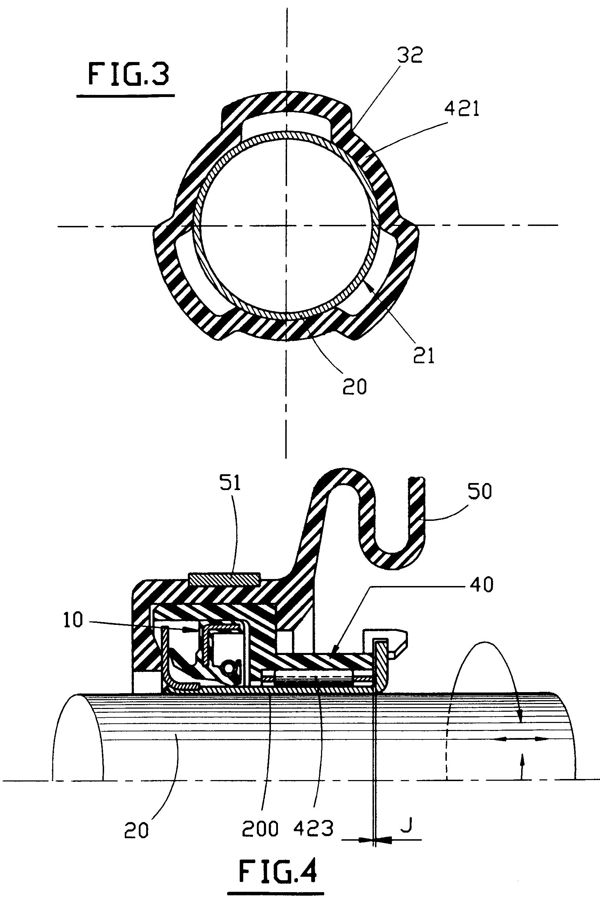

- la Figure 3 est une section transversale partielle du mode de réalisation de la Figure 1;
- la Figure 4 est une vue analogue à celle des Figures 1 et 2 d'un autre mode de réalisation;
- la Figure 5 illustre sur les vues A, B et C des variantes d'exécution d'un autre mode de réalisation d'un boîtier selon l'invention; et

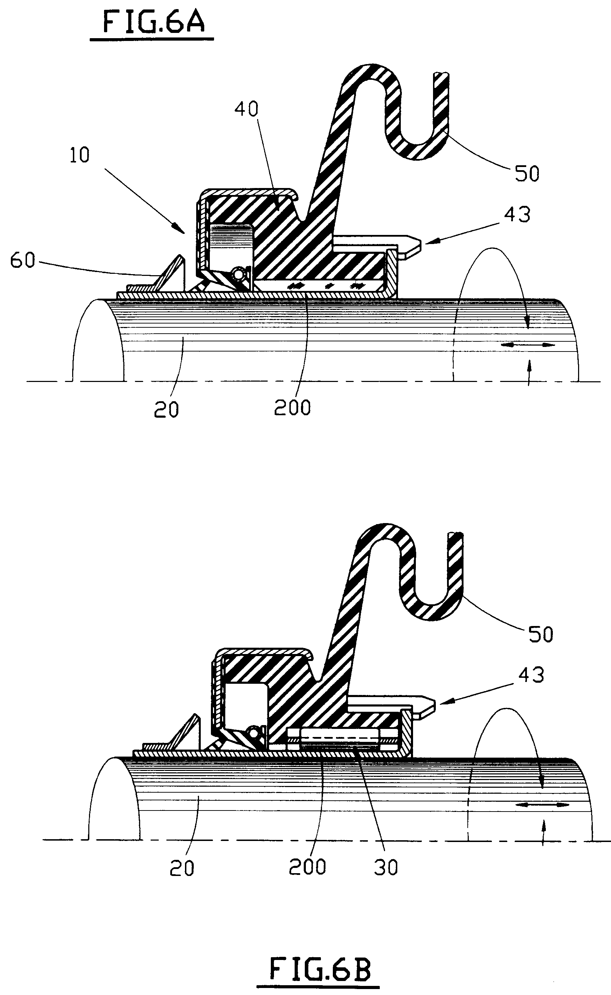

- la Figure 6 illustre sur les vues A et B des variantes d'exécution d'un autre mode de réalisation d'un boîtier selon l'invention.

Les boîtiers ou cartouches porte-joints d'étanchéité en général, les paliers de guidage lisses ou à roulement, et les joints d'étanchéité en particulier ceux qui sont destinés à l'industrie automobile étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier, il pourra se reporter utilement au document cité ainsi qu'au document FR 2 193 443.

Dans ce qui suit, on utilise toujours un même numéro de référence pour identifier un élément homologue quel que soit le mode de réalisation ou sa variante d'exécution.

Pour la commodité de l'exposé, on décrira successivement chacun des divers constituants d'un boîtier conforme à l'invention avant d'en donner au besoin un mode de fabrication, le montage et le fonction-nement.

Comme on peut l'observer, un boîtier porte-joint d'étanchéité à palier de guidage pour soufflet selon l'invention comprend une fois assemblé et monté un joint 10, un arbre 20, un palier 30, un boîtier 40 proprement dit, un soufflet 50 et au besoin un déflecteur 60.

Le joint 10 d'étanchéité comprend au moins une lèvre 11 destinée à coopérer directement ou indirectement avec l'arbre. Ce joint fait de tout matériau approprié par exemple un élastomère est, si besoin,, équipé d'une armature 12 par exemple métallique comme il est classique.

L'arbre 20 possède une surface extérieure 21 et un rebord 22 radial centrifuge avec une face d'appui 221 et une bordure périphérique 222 de diamètre déterminé. Comme on peut l'observer, la surface extérieure 21 et le rebord radial centrifuge 22 que possède l'arbre sont réalisés directement sur celui-ci ou bien sur une bague 200 rapportée sur l'arbre et emmanchée à force au besoin sur celui-ci.

Le palier 30 comprend une portée 31 intérieure continue cylindrique constituée par la surface extérieure 21 de l'arbre, et une portée 32 extérieure discontinue faite d'au moins trois zones de préférence angulairement équidistantes.

Le boîtier 40 comprend un corps 400 avec une tranche 401 terminale destinée à coopérer avec la surface d'appui 221 du rebord 22 de l'arbre 20, comme on le comprendra par la suite. Le boîtier 40 comprend essentiellement un logement 41 intérieur, un emplacement 42, des moyens de fixation 43 et, s'il y a lieu, un fourreau 44 intérieur de renfort. Le logement 41 intérieur est destiné à recevoir au moins partiellement le joint 10. L'emplacement 42 ménage une surface 421 intérieure qui constitue la portée extérieure 32 du palier 30. Comme on le voit, selon le mode de réalisation ou sa variante d'exécution, cette portée extérieure discontinue à au moins trois zones est constituée par des protubérances 421 intérieures centripètes en arc de cercle de l'emplacement 42, qui sont aptes à exercer une précontrainte. Selon un autre mode de réalisation, cette portée extérieure discontinue à zones est faite de patins 422 au besoin portés par des bras 4221 et soumis à l'action d'un ressort 4222 torique à boudin à spires hélicoïdales afin d'avoir une résultante centripète qui leur permet d'exercer une précontrainte. Selon un autre mode de réalisation, la portée extérieure discontinue à zones est faite par les éléments roulants 4230 d'un roulement 423 à billes ou à aiguilles au besoin retenus dans une cage 4231 et circulant contre une douille 4232 qui constitue leur chemin de roulement extérieur. Les moyens de fixation 43 coopèrent avec le rebord 22 de manière à ménager un jeu J bien déterminé ou une précontrainte axiale maîtrisée grâce à l'élasticité des moyens de fixation entre la face d'appui 221 du rebord et la tranche terminale 401 du corps du boîtier comme illustré. Ces moyens de fixation 43 sont par exemple constitués de pattes 431 relativement flexibles et élastiques, de préférence angulairement régulièrement réparties, qui sont chacune terminées par un crochet 432 ou similaire avec une rampe inclinée facilitant leur mise en place et leur encliquetage sur le rebord 22. Le boîtier est par exemple fait en une matière synthétique appropriée mise en forme par exemple par moulage par injection. S'il y a lieu, le boîtier 40 est doublé ou chemisé au moins localement par un fourreau 44 intérieur de renfort de préférence métallique.

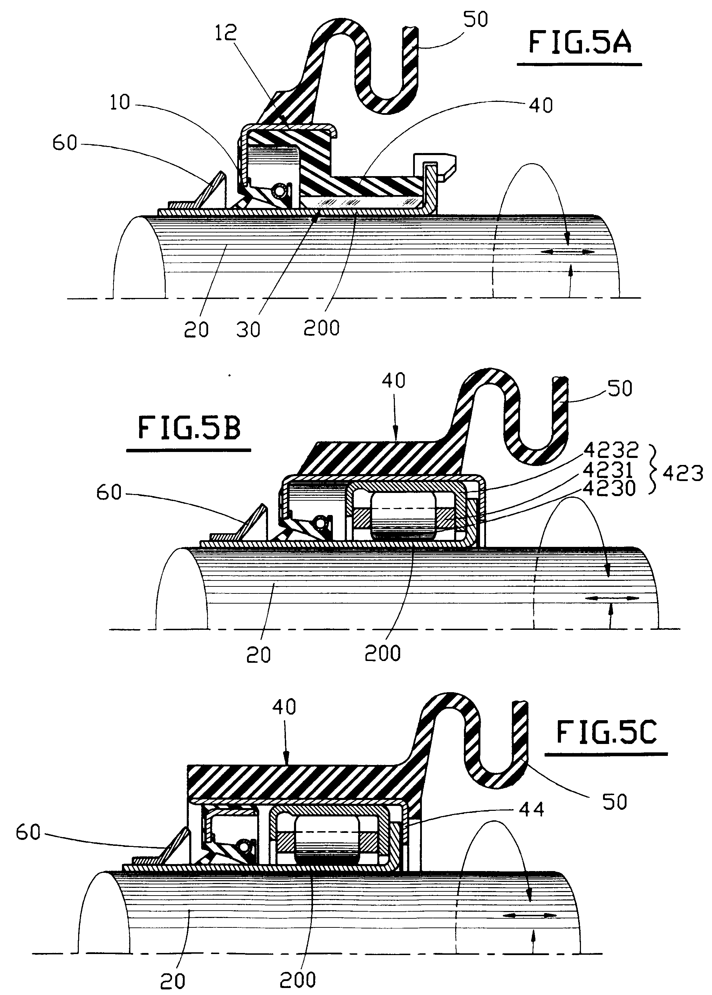

Selon le mode de réalisation illustré sur les Fig.5B et 5C le rebord radial centrifuge 22 est inséré entre la douille 4232 du roulement et le fourreau 44 qui double le boîtier. A la place d'une telle solution, on peut interposer le rebord radial centrifuge entre la douille et la cage 4231 du roulement.

Le soufflet 50 périphérique est ondulé et s'étend axialement. Les ondes du soufflet sont égales ou bien différentes de diamètre changeant progressivement. Comme on peut l'observer, ce soufflet est d'un seul tenant et monobloc avec le boîtier ou bien selon d'autres modes de réalisation est rapporté et fixé sur le boîtier, sur l'armature du joint ou sur le fourreau. La fixation est par exemple obtenue à l'aide d'un collier 51 ou par adhérisation. Le boîtier et/ou le soufflet sont de préférence faits en un élastomère thermoplastique composé par exemple de copolymères blocs constitués de segments durs (cristallins) de polytérèphtalate de butylène et de segments souples (amorphes) formés de longues chaînes de polyéther glycols. Le rapport quantitatif entre les segments durs et souples ainsi que leur disposition, fixent les propriétés de l'élastomère. Un type de matériau qui convient particulièrement bien pour une application à l'invention est celui mis dans le commerce sous la dénomination HYTREL par la Société DUPONT DE NEMOURS.

Le déflecteur 60, qui se présente par exemple à la manière d'un tronc de cône, est monté sur l'arbre 20 ou sur la bague 200 de manière à protéger le joint d'étanchéité en interdisant la pénétration de corps étrangers.

Comme cela ressort particulièrement bien de la description et de l'examen des figures, on observe que grâce au boîtier selon l'invention, on obtient à la fois le maintien du joint et le positionnement radial et axial par rapport à l'arbre tournant du joint et du soufflet avec en plus un soufflet associé au boîtier.

De plus la mise en place du boîtier par encliquetage permet de bien maîtriser le jeu axial entre face d'appui du rebord et tranche terminale du boîtier, et le diamètre extérieur important donné au rebord permet de limiter d'autant tout basculement du palier.

Ce qui précède met bien en lumière les particularités distinctives de l'invention, l'intérêt qu'elle offre et les avantages qu'elle procure.

## Revendications

**1 -** Boîtier porte-joint d'étanchéité à palier de guidage pour soufflet où le joint d'étanchéité (10) possède au moins une lèvre (11) destinée à coopérer avec un arbre, où l'arbre (20) possède une surface (21) extérieure et un rebord (22) radial centrifuge avec une face d'appui (221) et où le palier (30) comprend une portée (31) intérieure continue cylindrique constituée par cette surface extérieure (21) et une portée (32) extérieure discontinue faite d'au moins trois zones, boîtier (40) caractérisé en ce qu'il comprend un corps (400) avec une tranche (401) destinée à coopérer avec cette face d'appui (221), un logement (41) intérieur destiné à recevoir au moins partiellement le joint (10), un emplacement (42) ménageant une surface (421) intérieure qui constitue cette portée extérieure (32), des moyens de fixation (43) destinés à coopérer avec le rebord (22) pour maintenir le boîtier (40) sur l'arbre (20) et un soufflet (50) périphérique ondulé s'étendant axialement.

**2 -** Boîtier selon la revendication 1, caractérisé en ce que le boîtier (40) est équipé d'un fourreau (44) intérieur de renfort au moins à cet emplacement (42).

**3 -** Boîtier selon la revendication 1 ou 2, caractérisé en ce que le boîtier (40) et le soufflet (50) sont en un matériau synthétique.

**4 -** Boîtier selon la revendication 3, caractérisé en ce que le boîtier (40) et le soufflet (50) sont d'un seul tenant et monobloc.

**5 -** Boîtier selon la revendication 3, caractérisé en ce que le boîtier (40) et le soufflet (50) sont distincts et réunis.

**6 -** Boîtier selon la revendication 5, caractérisé en ce que le soufflet (50) est rapporté sur le boîtier (40) et maintenu en place.

**7 -** Boîtier selon la revendication 1 ou 2, caractérisé en ce que ces armature (12) et fourreau (44) sont métalliques, et en ce que le soufflet (50) est rapporté sur l'un de ces fourreau (44) et armature (12) et y est maintenu en place par adhérisation.

**8 -** Boîtier selon l'une quelconque des revendications 1 à 7, caractérisé en ce que les zones de la portée extérieure discontinue (32) sont faites de protubérances (421) intérieures centripètes en arc de cercle de l'emplacement (42) aptes à exercer une précontrainte.

**9 -** Boîtier selon l'une quelconque des revendications 1 à 7, caractérisé en ce que les zones de la portée extérieure discontinue (32) sont faites de patins (422) sollicités élastiquement centripètriquement afin d'exercer une précontrainte.

**10 -** Boîtier selon l'une quelconque des revendications 1 à 7, caractérisé en ce que les zones de la portée extérieure discontinue (32) sont faites par les éléments roulants (4230) d'un roulement (423).

**11 -** Boîtier selon l'une quelconque des revendications 1 à 10, caractérisé en ce que la surface extérieure (21) et le rebord (22) que possède l'arbre (20) sont ménagés sur une bague (200) enfilée sur l'arbre (20).

**12 -** Boîtier selon l'une quelconque des revendications 1 à 11, caractérisé en ce que la lèvre du joint (10) est protégée par un déflecteur (60) monté sur l'arbre (20).

**13 -** Boîtier selon l'une quelconque des revendications 3 à 12, caractérisé en ce que le boîtier (40) et le soufflet (50) sont faits en un élastomère thermoplastique constitué de segments durs de polytérèphtalate de butylène et de segments souples formés de longues chaînes de polyéther glycols.

**14 -** Application d'un boîtier conforme à l'une quelconque des revendications 1 à 13 à un arbre de sortie notamment d'automobile.
